# EUROPEAN PATENT APPLICATION

(11) **EP 1 568 952 A1**
(43) Date of publication of application: **31.08.2005**
(21) Application number: 04251121.2
(22) Date of filing: 27.02.2004
(51) Int. Cl.: F25B 13/00

(54) **Reversible heat pump system**

(71) Applicant: Delphi Technologies, Inc., Troy, MI 48007 (US)
(72) Inventor: Heys, Malcolm, 8053 Bertrange (LU); Schwind, Jos, 8239 Mamer (LU)
(74) Representative: Jones, Keith William

(57) **Abstract**

The system comprises a compressor (10), an outside heat exchanger (24), and an evaporator (20) and condenser (22) both positioned internally of a space such as a vehicle cabin. In a cooling mode, the compressor (10) circulates refrigerant around the outside heat exchanger (24) acting as a condenser and the evaporator (20). In a heating mode, refrigerant is circulated around the outside heat exchanger (24) acting as an evaporator and the condenser (22). In a third mode, the outside heat exchanger (24) is isolated and refrigerant is circulated around the condenser (22) and evaporator (20). The third mode is useful for providing defogging and heat at the same time. Choice of mode is controlled by a control valve (30) acting in conjunction with reversing valve (14), evaporator valve (34) and condenser check valve (28).

## Description

This invention relates to a reversible heat pump system suitable for heating and air conditioning use in motor vehicles.

Vehicle air conditioning systems are well established. Conventionally, the air conditioning system is used only to cool the passenger compartment, with heating being separately provided using waste engine heat.

It is also known, although less common, for such systems to be reversible so as to be usable for cooling or heating the passenger compartment. In the present application, the cooling mode is referred to as "air conditioning" or "A/C", while the heating mode is referred to as "heat pump" operation. This is desirable, for example, where the available engine heat is limited, as with high efficiency diesel engines. Examples of reversible systems are shown in GB 2,375,596A, US 4,991,405, and EP 1,247,670.

There are, however, situations in which it would be desirable to provide both air conditioning and heat pump operation simultaneously, especially for simultaneous heating and de-fogging of the passenger compartment.

Accordingly, the present invention provides a reversible heat pump system for use in heating and cooling a given space, comprising:
a compressor;
an outside heat exchanger which, in use, is positioned outside said space;
an inside heat exchanger positioned, in use, inside said space; and
a reversing valve connected to the compressor such that the outside heat exchanger can be connected to act as a condenser or an evaporator;
and is characterised in that:
   the inside heat exchanger comprises an evaporator and a condenser or gas cooler;
   a control valve is positioned such that closure of the control valve prevents flow through the outside heat exchanger; and
   further valve means are provided which are operable, when said control valve is fully or partially closed, to permit refrigerant to flow through the condenser or gas cooler and the evaporator sequentially.

In this way, the system can be selectively operated in a heat pump mode, an A/C mode, or a de-fogging mode.

Preferred features and advantages of the invention will be apparent from the claims and the following description.

An embodiment of the invention will now be described, by way of example only, with reference to the drawings, in which:
Figure 1 is a schematic of one form of reversible heat pump system in accordance with the invention;
Figure 2 shows the system of Figure 1 in operation in air conditioning (cooling) mode;
Figure 3 shows the system of Figure 1 in operation in heat pump (heating) mode; and
Figure 4 shows the system of Figure 1 in operation in a defogging mode.

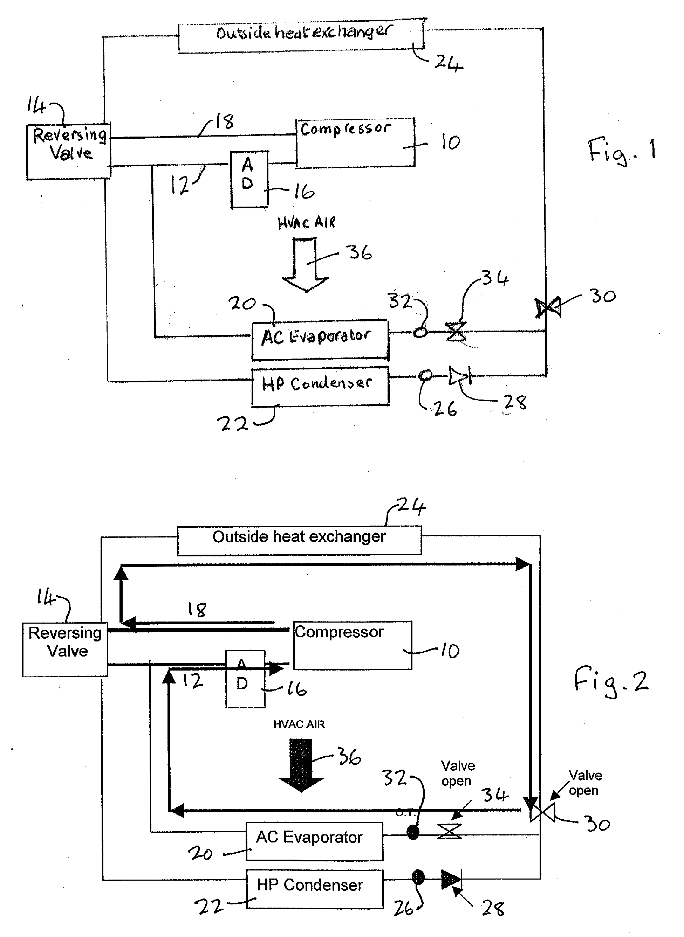

Referring to Figure 1, the system comprises a compressor 10 having an inlet 12 connected to a reversing valve 14 via an accumulator-drier 16, and an outlet 18 also connected to the reversing valve 14. The inlet 12 is also connected to an air conditioning evaporator 20.

The AC evaporator 20 is positioned in the vehicle interior along with a heat pump condenser 22. A heating ventilating and air conditioning air flow 36, produced by a suitable fan, can be directed across the AC evaporator 20 and subsequently the HP condenser 22 and thence into the vehicle interior. An outside heat exchanger 24 is positioned exteriorly of the vehicle cabin.

One side of the HP condenser 22 is connected to the reversing valve 14, and the other side via an orifice tube 26 and check valve 28 to a control valve 30. The AC evaporator 20 is connected between the accumulator drier 16 and the control valve 30 via an orifice tube 32 and a valve 34. The outside heat exchanger 24 is connected between the opposite side of the control valve 30 and the reversing valve 14.

The system is thus similar to prior art reversible systems except for the addition of the control valve 30.

Figure 2 shows the system operating in air conditioning (cooling) mode. The control valve 30 is open, as is the AC evaporator valve 34. Refrigerant circulates as shown, with the outside heat exchanger 24 acting as a condenser. Flow through the HP condenser 22 is prevented by the check valve 28.

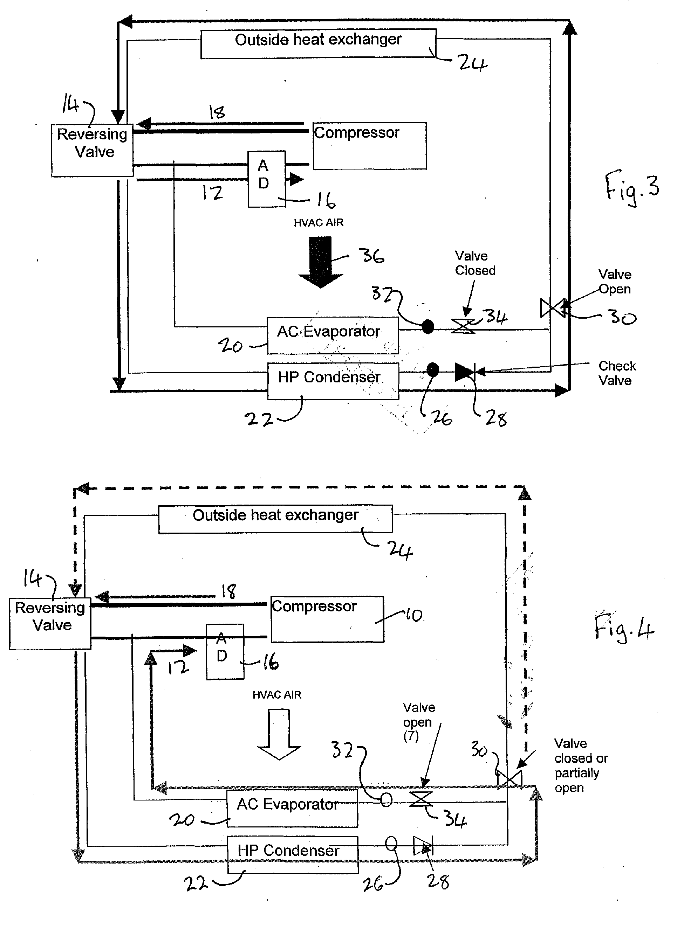

Figure 3 shows the system operating in heat pump (heating) mode. The control valve 30 is open, and the AC evaporator valve 34 is closed. Refrigerant circulates as shown, with the outside heat exchanger 24 acting as an evaporator.

Figure 4 shows the system operating in defogging mode. With the AC evaporator valve 34 open and the control valve 30 closed, refrigerant circulates as shown in full lines. In this condition, the AC evaporator 20 acts as the system evaporator, the HP condenser 22 acts as the system condenser, and the outside heat exchanger 24 is inoperative.

The air flow 36 passes first through the AC evaporator 20 which cools the air below its dew point thereby removing moisture. This air is then reheated by passing through the HP condenser 22. In this condition the heat extracted from the air by the AC evaporator 20 plus that supplied by the compressor 10 is supplied to the air at the HP condenser 22.

Alternatively, the control valve 30 can be partially opened, giving the refrigerant flow indicated in dashed lines. In this condition, additional heat is added to the system from the outside heat exchanger 24.

The AC evaporator 20 may be provided with a sensor (not shown) for detecting freezing of the evaporator, the control valve 30 being partially opened in response to evaporator freezing to provide additional heat.

An automatic control may be added to produce gradual opening of the control valve 30 accompanied by gradual closing of the AC evaporator valve 34, in order to achieve a gradual transition from defogging to heat pump mode.

The foregoing embodiment is suitable for use with conventional refrigerant. If a gas such as carbon dioxide is sued as the refrigerant, the condenser would be replaced by a gas cooler.

The invention is particularly useful in vehicles such as cars, but may also be used in other forms of HVAC systems. Modifications may be made to the foregoing embodiment within the scope of the appended claims.

## Claims

1. A reversible heat pump system for use in heating and cooling a given space, comprising:
a compressor (10);
an outside heat exchanger (24) which, in use, is positioned outside said space;
an inside heat exchanger (20, 22) positioned, in use, inside said space; and
a reversing valve (14) connected to the compressor (10) such that the outside heat exchanger (24) can be connected to act as a condenser or an evaporator;
**characterised in that**:
the inside heat exchanger comprises an evaporator (20) and a condenser (22) or gas cooler;
a control valve (30) is positioned such that closure of the control valve (30) prevents flow through the outside heat exchanger (24); and
further valve means (28,34) are provided which are operable, when said control (30) valve is fully or partially closed, to permit compressed refrigerant to flow through the condenser (22) or gas cooler and the evaporator (20) sequentially.

2. A system according to claim 1, including a fan arranged to pass an airflow (36) over the evaporator (20) and the condenser (22) or gas cooler sequentially.

3. A system according to claim 1 or claim 2, in which the evaporator (20) and the condenser (22) or gas cooler are connected in parallel to the control valve (30); and said further valve means (28,34) comprises a controllable valve (34) between the evaporator (20) and the control valve (30), and a check valve (28) between the condenser (22) or gas cooler and the control valve (30) permitting flow only from the condenser (22) or gas cooler to the control valve (30).

4. A system according to claim 3, in which a first orifice tube (32) is provided between the evaporator (20) and the controllable valve (34), and a second orifice tube (26) is provided between the condenser (22) and the check valve (28).

5. A system according to any preceding claim, in which freezing of the evaporator (20) causes the control valve (30) to be partially opened.

6. A system according to any preceding claim, in which an accumulator-drier (16) is provided at the inlet to the compressor (10).

7. A system according to any preceding claim, in which pressure differences across the system cause the control valve (30) to be partially open thereby enabling smooth transition from one mode to another.
